# EUROPÄISCHE PATENTSCHRIFT

(11) **EP 2 244 072 B1**
(45) Veröffentlichungstag und Bekanntmachung des Hinweises auf die Patenterteilung: **07.09.2011**
(21) Anmeldenummer: 09005705.0
(22) Anmeldetag: 23.04.2009
(51) Int. Cl.: G01D 11/30

(54) **Sensorbefestigungsvorrichtung**
Sensor attachment device
Dispositif de fixation de capteur

(43) Veröffentlichungstag der Anmeldung: 27.10.2010
(73) Patentinhaber: Pepperl + Fuchs GmbH, 68307 Mannheim (DE)
(72) Erfinder: Flender, Michael, 12683 Berlin (DE); Subramanian, Shiva, Singapore-560421 (IN)
(74) Vertreter: Koch, Bertram

(56) Entgegenhaltungen:
- WO-A-2006/061455
- DE-C1- 3 344 010

## Beschreibung

Die Erfindung betrifft eine Sensorbefestigungsvorrichtung gemäß dem Oberbegriff des Patentanspruchs 1 und ein Verfahren zur Herstellung einer Sensorbefestigungsvorrichtung gemäß dem Oberbegriff des Patentanspruchs 8.

Befestigungsvorrichtungen zur Aufnahme von Sensoren werden in industriellen Produktionsprozessen eingesetzt, um Sensoren vorzugsweise zur Überwachung und oder zur Steuerung von Herstellungsverfahren einzusetzen. Eine Sensorbefestigungsvorrichtung ist in der Druckschrift DE 33 44010 C1 als Halterung für einen Annäherungsfühler offenbart. Die Vorrichtung weist eine spannbare, längsgeschlitzte Hülse auf, die ein Innengewinde aufweist und mittels zwei Klemmbacken befestigt wird. Nachteilig ist, dass eine derartige Sensorbefestigungsvorrichtung aufwändig in der Herstellung und kostenintensiv ist. Eine weitere Sensorbefestigungsvorrichtung ist aus der WO2006/061455 bekannt.

Vor diesem Hintergrund besteht die erstgenante Aufgabe der Erfindung darin, eine Sensorbefestigungsvorrichtung und als zweitgenannte Aufgabe ein Verfahren zur Herstellung einer Sensorbefestigungsvorrichtung anzugeben, die jeweils die Nachteile des Standes der Technik verringern.

Die erstgenannte Aufgabe wird durch eine Sensorbefestigungsvorrichtung mit den Merkmalen des Patentanspruchs 1, die zweitgenante Aufgabe durch ein Verfahren zur Herstellung einer Sensorbefestigungsvorrichtung mit den Merkmalen des Patentanspruchs 8 gelöst. Vorteilhafte Ausgestaltungen der Erfindung sind Gegenstand von Unteransprüchen.

Gemäß dem Gegenstand der Erfindung nach Anspruch 1 wird eine Sensorbefestigungsvorrichtung bereitgestellt, aufweisend, ein Gehäuse mit einer Oberseite und einer Rückseite, wobei in dem Gehäuse eine Durchgangsöffnung ausgebildet ist, und eine Hülse mit einem Innengewinde zur Aufnahme eines Sensors mit einem ersten Ende und einem zweiten Ende, wobei die Hülse in die Durchgangsöffnung eingelassen ist und die Hülse einstückig ausgebildet ist und das erste Ende der Hülse einen ersten Kragen aufweist, der durch Einschieben in eine erste Aussparung an der Oberseite des Gehäuses eingelassen ist, und das zweite Ende der Hülse nach dem Einschieben durch einen Umformprozess ein zweiter Kragen ausgebildet ist und der zweite Kragen in eine zweite Aussparung an der Rückseite des Gehäuses eingelassen ist.

Gemäß dem Gegenstand der Erfindung nach Anspruch 8 wird ein Verfahren zur Herstellung einer Sensorbefestigungsvorrichtung in einem Gehäuse bereitgestellt, das eine Oberseite und eine Rückseite aufweist und zwischen der Oberseite und der Rückseite des Gehäuses eine Durchgangsöffnung zur Aufnahme einer Hülse ausgebildet wird, an der Oberseite der Durchgangsöffnung in dem Gehäuse eine erste Aussparung und an der Rückseite der Durchgangsöffnung in dem Gehäuse eine zweite Aussparung ausgebildet wird, eine Hülse mit einem Innengewinde mit einem an einem ersten Ende ausgebildeten ersten Kragen in die Durchgangsöffnung eingeschoben wird, so dass der erste Kragen im Wesentlichen formschlüssig in die erste Aussparung des Gehäuses eingeschoben wird und nach dem Einschieben der Hülse an deren zweiten Ende mittels Umformung ein zweiter Kragen ausgebildet wird, der von der zweiten Aussparung aufgenommen wird.

Ein Vorteil der erfindungsgemäßen Sensorbefestigungsvorrichtung ist es, dass die Hülse nicht aufwändig durch eine Klemmbackenvorrichtung in ein Gehäuse eingebaut werden muss, sondern einfach in ein bereits bestehendes Gehäuse mit einer Durchgangsöffnung eingeschoben werden kann. Die Sicherung der Hülse erfolgt durch eine einfache Umformung des Randes der Hülse in dem der weitere zweite Kragen nach dem Einschieben ausgebildet wird. Des Weiteren wird bei der Verwendung eines Spritzgussverfahrens eine aufwändiger Justage der Gewindehülse eingespart und die Gewindehülse lässt sich mit einer geringeren Wandstärke ausführen. Untersuchungen der Anmelderin haben gezeigt, dass sich durch die erfindungsgemäße Lösung schnell, kostengünstig und sehr flexibel Sensorbefestigungsvorrichtungen herstellen lassen. Durch die erste Aussparung und zweite Aussparung und die korrespondierenden Kragen lassen sich die Teile in Serie vorfertigen und bei Bedarf erst an die jeweiligen Gehäusestellen einfügen. Hierbei kann die Aussparungen je nach Anwendung so ausgeformt werden, dass sowohl der erste Kragen als auch der zweite Kragen nicht plan mit der jeweiligen Gehäuseoberseite abschließen und insbesondere auch einen Überstand aufweisen.

In einer Weiterbildung weist die Sensorbefestigungsvorrichtung die Aussparung an der Oberseite des Gehäuses eine wenigstens dreieckige, vorzugsweise sechseckige Ausformung zur Aufnahme eines entsprechend ausgebildeten ersten Kragens auf. Indem der erste Kragen und die erste Ausformung wenigstens dreieckig oder vorzugsweise sechseckig ausgeformt sind, wird eine Verdrehsicherung der Hülse gegenüber dem Gehäuse ausgebildet. Hierdurch wird verhindert, dass beim Einschrauben des Sensors die Hülse mitgedreht wird.

In einer anderen Ausführungsform ist die erste Aussparung kreisförmig ausgebildet. Hierbei weist der erste Kragen der Hülse vorzugsweise ein erstes Vielzahlprofil an der Außenfläche bzw. an der äußeren Umrandung des Kragens auf. Insbesondere wenn das Gehäuse im Wesentlichen aus einem Kunststoffmaterial und die Hülse im Wesentlichen aus einem Metall ausgebildet sind, lässt sich ein Verdrehschutz ausbilden. Hierzu wird der Innendruchmesser der Aussparung entsprechend gewählt, so dass die Hülse bzw. der Kragen vorzugsweise eingepresst werden kann.

In einer bevorzugten Weiterbildung weist die Hülse als Verdrehschutz zur Übertragung von Drehkräften auf das Gehäuse an der Außenseite der Hülse wenigstens teilweise ein zweites Vielzahlprofil auf. Diese Profilierung lässt sich alternativ oder zusätzlich zu dem ersten Vielzahlprofil des ersten Kragens ausbilden.

In einer anderen bevorzugten Weiterbildung der Sensorbefestigungsvorrichtung sind die Aussparungen im Gehäuse korrespondierend zu den Ausformungen des ersten und zweiten Kragens ausgebildet, so dass die Hülse im eingebauten Zustand an beiden Seiten des Gehäuses plan eingebaut ist. Indem weder eine Erhöhung oder eine Vertiefung nach dem Einbau der Hülse ausgebildet wird, lassen sich derartige Sensorbefestigungsvorrichtungen leicht aneinander reihen.

Die Erfindung wird nachfolgend unter Bezugnahme auf die Zeichnungen näher erläutert. Hierbei werden gleichartige Teile mit identischen Bezeichnungen beschriftet. Darin zeigen die:
- Figur 1: eine schematische Schnittzeichnung einer erfindungsgemäßen Sensorbefestigungsvorrichtung,
- Figur 2: eine Draufsicht auf die Gehäuseoberseite mit einer eingebauten Hülse gemäß der Sensorbefestigungsvorrichtung der Figur 1,
- Figur 3: eine Draufsicht auf die Gehäuseunterseite mit einer eingebauten Hülse gemäß der Sensorbefestigungsvorrichtung der Figur 1,
- Figur 4: eine perspektivische Ansicht einer nicht verbauten Hülse mit einem sechseckig ausgeformten ersten Kragen,
- Figur 5: eine perspektivische Ansicht einer nicht verbauten Hülse mit einem runden Kragen und einer entsprechend geformten ersten Aussparung.

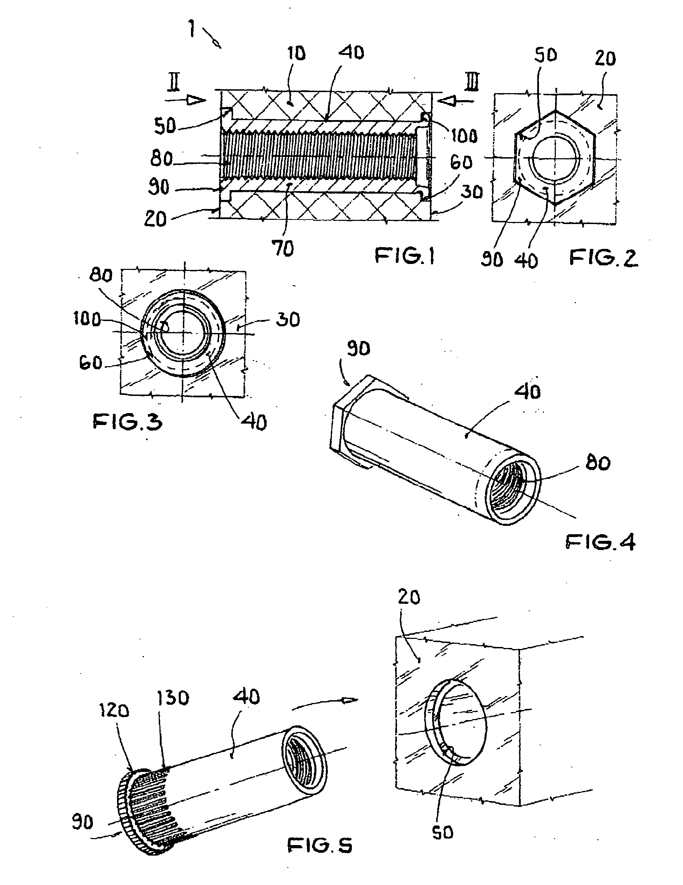

Die Abbildung der Figur 1 zeigt eine erfindungsgemäße Sensorbefestigungsvorrichtung 1, aufweisend ein Gehäuse 10 mit einer Oberseite 20 und einer Rückseite 30, einer Durchgangsöffnung 40 mit einer ersten Aussparung 50 und einer zweiten Aussparung 60. In die Durchgangsöffnung 40 ist die Hülse 70, die ein Innengewinde 80, einen sechseckigen ersten Kragen 90 und einen runden zweiten Kragen 100 aufweist, in die Oberseite 20 des Gehäuses 10 eingeschoben. Während der erste Kragen 90 vor dem Einschieben der Hülse 70 ausgebildet ist und als Arretierung beim Einschieben dient, wird der zweite Kragen 100 erst nach dem Einschieben der Hülse 70 mittels eines Umformprozesses ausgebildet. Es ist vorgesehen, dass die Ausformung des ersten Kragens 90 und des zweiten Kragens 100 zu den jeweiligen Aussparungen 50, 60 korrespondieren, vorzugsweise möglichst formschlüssig mit den Aussparungen 50, 60 ineinandergreifen. Die Umformung bzw. die Ausbildung des zweiten Kragens lässt sich mit herkömmlichen Verfahren wie beispielsweise einem Stempel oder einer Presse durchführen. Des Weiteren ist es bevorzugt, dass die Kragen 90, 100 jeweils plan mit der jeweiligen Gehäuseseite abschließen.

In der Figur 2 ist eine Draufsicht auf die Sensorbefestigungsvorrichtung 1 der Figur 1 dargestellt. Auf der Oberseite 20 des Gehäuses 10 ist der sechseckige erste Kragen 90 formschlüssig in die erste Aussparung 50 angeordnet und bildet hierdurch einen wirksamen Verdrehschutz für das Einschrauben eines Sensors aus. Des Weiteren dient der erste Kargen 90 als wirksamer Anschlag bei dem Einschieben der Hülse 70 in die Durchgangsöffnung 40 des Gehäuses 10.
Die Abbildung der Figur 3 zeigt eine Draufsicht auf den zweiten Kragen 100. Der zweite runde Kragen 100 wird vorzugsweise unmittelbar nach dem Einschieben der Hülse 70 in die Durchgangsöffnung 40 des Gehäuses 20 auf der Rückseite 30 ausgebildet. Hierbei wird bevorzugt durch Umbördeln der zweite runde Kragen 100 derart ausgeformt, dass der zweite Kragen 100 im Wesentlichen formschlüssig in die zweite Aussparung 60 des Gehäuses 10 eingefügt wird.

Gemäß der Abbildung der Figur 5 ist die Hülse 70 in einem unverbauten Zustand d.h. vor dem Einschieben und Umformen dargestellt. Die Hülse 70 weist eine gerade zylindrische Form und den sechseckigen ersten Kragen 90 auf. Der erste Kragen 90 lässt sich sowohl mittels eines Umformprozesses oder durch Fügeverfahren wie beispielsweise Schweißen oder Löten von einer handelsüblichen Mutter an die Hülse 70 anbringen.

In der Darstellung der Figur 5 ist eine weitere Ausführungsform der Hülse 70 in Verbindung mit dem Gehäuse 10 in einem nicht unverbundenen Zustand abgebildet. Die Hülse 70 weist den ersten Kragen 90 in einer runden Ausführungsform auf. An der Außenseite bzw. am äußeren Rand des ersten Kragens 90 ist ein erstes Vielzahnprofil 120 angeordnet. Zusätzlich weist die Hülse 70 im oberen Bereich ein zweites Vielzahnprofil 130 auf. Die korrespondierende Aussparung 50 des Gehäuses 10 weist demgegenüber kein Vielzahnprofil auf, sondern ist insbesondere an den Seitenwänden glatt ausgeformt. Indem das Material des Gehäuses 10 eine wesentlich geringere Härte aufweist und zudem plastisch verformbar ist, lässt sich die Hülse 70 unter Druck in die Öffnung 40 des Gehäuses 10 einführen. Hierbei wird ein Vielzahnprofil in das Gehäuse 10 geschnitten und ein Verdrehschutz bzw. Verdrehsicherung ausgebildet.

## Patentansprüche

1. Sensorbefestigungsvorrichtung (1) aufweisend,
ein Gehäuse (10) mit einer Oberseite (20) und einer Rückseite (30), wobei in dem Gehäuse (10) eine Durchgangsöffnung (40) ausgebildet ist, eine Hülse (70) mit einem Innengewinde (80) zur Aufnahme eines Sensors mit einem ersten Ende und einem zweiten Ende, wobei die Hülse (70) in die Durchgangsöffnung (40) eingelassen ist,
**dadurch gekennzeichnet, dass**
die Hülse (40) einstückig ausgebildet ist und das erste Ende der Hülse (70) einen ersten Kragen (90) aufweist, der durch Einschieben in eine erste Aussparung (50) an der Oberseite (20) des Gehäuses (10) eingelassen ist, das zweite Ende der Hülse (70) nach dem Einschieben durch einen Umformprozess ein zweiter Kragen (100) ausgebildet ist und der zweite Kragen (100) in eine zweite Aussparung (60) an der Rückseite (30) des Gehäuses (10) eingelassen ist.

2. Sensorbefestigungsvorrichtung (1) gemäß Anspruch 1, **dadurch gekennzeichnet, dass** die erste Aussparung (50) an der Oberseite (20) eine wenigstens dreieckige Ausformung zur Aufnahme eines entsprechend ausgebildeten ersten Kragens (90) aufweist

3. Sensorbefestigungsvorrichtung (1) gemäß Anspruch 1 oder Anspruch 2, **dadurch gekennzeichnet, dass** die erste Aussparung (50) an der Oberseite (20) eine sechseckige Ausformung zur Aufnahme eines entsprechend ausgebildeten ersten Kragens (90) aufweist.

4. Sensorbefestigungsvorrichtung (1) nach einem der Ansprüche 1 bis 3, **dadurch gekennzeichnet, dass** die erste Aussparung (50) an der Oberseite (20) eine kreisförmige Ausformung zur Aufnahme eines mit einem ersten Vielzahlprofil (110) ausgebildeten ersten Kragens (90) aufweist.

5. Sensorbefestigungsvorrichtung (1) nach einem der Ansprüche 1 bis 4, **dadurch gekennzeichnet, dass** die Hülse (70) als Verdrehschutz zur Übertragung von Drehkräften auf das Gehäuse (10) an der Außenseite wenigstens teilweise einem zweiten Vielzahlprofil (120) aufweist.

6. Sensorbefestigungsvorrichtung (1) nach einem der Ansprüche 1 bis 5, **dadurch gekennzeichnet, dass** die Hülse (50) an beiden Seiten plan in das Gehäuse (10) eingebaut ist.

7. Sensorbefestigungsvorrichtung (1) nach einem der Ansprüche 1 bis 6, **dadurch gekennzeichnet, dass** das Gehäuse (10) im Wesentlichen aus einem Kunststoff und die Hülse (70) im Wesentlichen aus einem Metall ausgebildet ist.

8. Verfahren zur Herstellung einer Sensorbefestigungsvorrichtung (1) in einem Gehäuse (10), das eine Oberseite (20) und eine Rückseite (30) aufweist,
**dadurch gekennzeichnet, dass**
zwischen Oberseite (20) und Rückseite (30) des Gehäuses (10) eine Durchgangsöffnung (40) zur Aufnahme einer Hülse (70) ausgebildet wird, an der Oberseite der Durchgangsöffnung (40) in dem Gehäuse (10) eine erste Aussparung (50) und an der Rückseite (30) der Durchgangsöffnung (40) in dem Gehäuse (10) eine zweite Aussparung (60) ausgebildet wird, eine Hülse (70) mit einem Innengewinde (80) mit einem an einem ersten Ende ausgebildeten ersten Kragen (90) in die Durchgangsöffnung (40) eingeschoben wird, so dass der erste Kragen (90) im Wesentlichen formschlüssig in die erste Aussparung (50) des Gehäuses (10) eingeschoben wird,
nach dem Einschieben der Hülse (70) an deren zweiten Ende mittels Umformung ein zweiter Kragen (100) ausgebildet wird, der von der der zweiten Aussparung (60) aufgenommen wird.

9. Verfahren zur Herstellung einer Sensorbefestigungsvorrichtung (1) nach Anspruch 8, **dadurch gekennzeichnet, dass** die erste Aussparung (50) und der erste Kragen (90) wenigstens dreieckig, vorzugsweise sechseckig ausgeformt werden.

10. Verfahren zur Herstellung einer Sensorbefestigungsvorrichtung (1) nach Anspruch 8, **dadurch gekennzeichnet, dass** die erste Aussparung (50) kreisförmig zur Aufnahme eines entsprechend ausgebildeten ersten Kragens (90) ausgeformt wird.

11. Verfahren zur Herstellung einer Sensorbefestigungsvorrichtung (1) nach einem der Ansprüche 8 bis 10, **dadurch gekennzeichnet, dass** an der äußeren Umrandung des ersten Kragens (90) ein erstes Vielzahlprofil (120) ausgebildet wird.

12. Verfahren zur Herstellung einer Sensorbefestigungsvorrichtung (1) nach einem der Ansprüche 8 bis 11, **dadurch gekennzeichnet, dass** an der Au-βenseite der Hülse (70) wenigstens teilweise ein zweites Vielzahlprofil (130) ausgebildet wird.

13. Verfahren zur Herstellung einer Sensorbefestigungsvorrichtung (1) nach einem der Ansprüche 8 bis 12, **dadurch gekennzeichnet, dass** die Hülse (70) an der Oberseite (20) und an der Rückseite (30) des Gehäuses (10) plan in das Gehäuse (10) eingebaut wird.

## Claims

1. Sensor fastening device (1) comprising a housing (10) with an upper side (20) and a rear side (30), wherein a passage opening (40) is formed in the housing (10), a sleeve (70) with an internal thread (80) for reception of a sensor with a first end and a second end, wherein the sleeve (70) is let into the passage opening (40), **characterised in that** the sleeve (40) is of integral construction and the first end of the sleeve (70) has a first collar (90), which is let in by pushing into a first recess (50) at the upper side (20) of the housing (10), the second end of the sleeve (70) after the pushing-in is formed into a second collar (100) by a deforming process and the second collar (100) is let into a second recess (60) at the rear side (30) of the housing (10).

2. Sensor fastening device (1) according to claim 1, **characterised in that** the first recess (50) at the upper side (20) has a substantially triangular shape for reception of a correspondingly formed first collar (90).

3. Sensor fastening device (1) according to claim 1 or 2, **characterised in that** the first recess (50) at the upper side (20) has a hexagonal shape for reception of a correspondingly formed first collar (90).

4. Sensor fastening device (1) according to any one of claims 1 to 3, **characterised in that** the first recess (50) at the upper side (20) has a circular shape for reception of a first collar (90) formed with a first multiple profile (110).

5. Sensor fastening device (1) according to any one of claims 1 to 4, **characterised in that** the sleeve (70) has at the outer side at least in part a second multiple profile (120) as anti-turn protection for transmission of rotational forces to the housing (10).

6. Sensor fastening device (1) according to any one of claims 1 to 5, **characterised in that** the sleeve (50) is installed planarly at both ends in the housing (10).

7. Sensor fastening device (1) according to any one of claims 1 to 6, **characterised in that** the housing (10) is constructed substantially from a plastics material and the sleeve (70) substantially from a metal.

8. Method of producing a sensor fastening device (1) in a housing (10) having an upper side (20) and a rear side (30), **characterised in that** a passage opening (40) for reception of a sleeve (70) is formed between the upper side (20) and the rear side (30) of the housing (10), a first recess (50) is formed in the housing (10) at the upper side of the passage opening (40) and a second recess (60) is formed in the housing (10) at the rear side (30) of the passage opening (40), a sleeve (70) with an internal thread (80) with a first collar (90) formed at a first end) is pushed into the passage opening (40) so that the first collar (90) is pushed in substantially mechanically positive manner into the first recess (50) of the housing (10) and after pushing-in of the sleeve (70) a second collar (100) is formed at the second end thereof by means of deforming and is received by the second recess (60).

9. Method of producing a sensor fastening device (1) according to claim 8, **characterised in that** the first recess (50) and the first collar (90) are formed to be at least triangular, preferably hexagonal.

10. Method of producing a sensor fastening device (1) according to claim 8, **characterised in that** the first recess (50) is formed to be circular for reception of a correspondingly shaped first collar (90).

11. Method of producing a sensor fastening device (1) according to any one of claims 8 to 10, **characterised in that** a first multiple profile (120) is formed at the outer rim of the first collar (90).

12. Method of producing a sensor fastening device (1) according to any one of claims 8 to 11, **characterised in that** a second multiple profile (13) is formed at least in part at the outer side of the sleeve (70).

13. Method of producing a sensor fastening device (1) according to any one of claims 8 to 12, **characterised in that** the sleeve (70) is installed planarly in the housing (10) at the upper side (20) and at the rear side (30) of the housing (10).

## Revendications

1. Dispositif de fixation (1) d'un capteur comprenant un boîtier (10) à face supérieure (20) et à face arrière (30), boîtier qui présente une ouverture traversante (40), une douille (70) avec un filetage intérieur (80) pour la réception d'un capteur présentant une première extrémité et une deuxième extrémité, dans lequel la douille (70) est introduite dans l'ouverture traversante (40)
**caractérisé en ce que**
la douille (70) est formée d'une seule pièce et la première extrémité de la douille (70) présente une collerette (90), qui est introduite par coulissement dans un premier évidement (50) sur la face supérieure (20) du boîtier (10), la deuxième extrémité de la douille (70) étant conformée après l'introduction par coulissement en une deuxième collerette (100) par un procédé de formage et **en ce que** la deuxième collerette (100) est introduite dans un deuxième évidement (60) sur la face arrière du boîtier (10).

2. Dispositif de fixation (1) d'un capteur selon la revendication 1 **caractérisé en ce que** le premier évidement (50) sur la face supérieure (20) présente une conformation au moins triangulaire pour la réception d'une première collerette (90) de forme correspondante.

3. Dispositif de fixation (1) d'un capteur selon la revendication 1 ou la revendication 2 **caractérisé en ce que** le premier évidement (50) existant sur la face supérieure (20) présente une conformation hexagonale pour la réception d'une première collerette (90) de forme correspondante.

4. Dispositif de fixation (1) d'un capteur selon l'une des revendications 1 à 3 **caractérisé en ce que** le premier évidement (50) existant sur la face supérieure (20) présente une conformation circulaire pour la réception d'une première collerette (90) présentant un premier profil multiple (110).

5. Dispositif de fixation (1) d'un capteur selon l'une des revendications 1 à 4 **caractérisé en ce que** la douille (70) présente sur sa face extérieure au moins partiellement un deuxième profil multiple (120) en tant que protection contre la torsion pour la transmission de forces de pivotement sur le boîtier (10).

6. Dispositif de fixation (1) d'un capteur selon l'une des revendications 1 à 5 **caractérisé en ce que** la douille (70) est fabriquée plane sur ses deux côtés dans le boîtier (10).

7. Dispositif de fixation (1) d'un capteur selon l'une des revendications 1 à 6 **caractérisé en ce que** le boîtier (10) est essentiellement réalisé en matière plastique et **en ce que** la douille (70) est réalisée essentiellement en un métal.

8. Procédé pour la fabrication d'un dispositif de fixation (1) dans un boîtier (10) qui présente une surface supérieure (20) et une surface arrière (30),
**caractérisé en ce que**
. l'on forme entre la face supérieure (20) et la face arrière (30) du boîtier (10) une ouverture traversante (40) pour la réception d'une douille (70)
. l'on réalise sur la face supérieure de l'ouverture traversante (40) dans le boîtier (10) un premier évidement (50) et sur la face arrière (30) de l'ouverture traversante (40) dans le boîtier (10) un deuxième évidement (60)
. l'on introduit par coulissement dans l'ouverture traversante (40) une douille (70) présentant un filetage intérieur (80) et une première collerette (90) conformée à une première extrémité de façon que la première collerette (90) soit introduite par coulissement essentiellement par ajustement de forme dans le premier évidement (50) du boîtier (10),
. l'on réalise après introduction par coulissement de la douille (70) dans sa deuxième extrémité et par un procédé de formage une deuxième collerette (100) qui est reçue par le deuxième évidement (60).

9. Procédé pour la fabrication d'un dispositif de fixation (1) selon la revendication 8 **caractérisé en ce que** le premier évidement (50) et la première collerette (90) sont conformés au moins triangulaires, de préférence hexagonaux.

10. Procédé pour la fabrication d'un dispositif de fixation (1) selon la revendication 8 **caractérisé en ce que** le premier évidement (50) est conformé circulaire pour la réception d'une collerette (90) de forme correspondante.

11. Procédé pour la fabrication d'un dispositif de fixation (1) selon l'une des revendications 8 à 10 **caractérisé en ce que** sur la bordure périphérique de la première collerette (90) est conformée un premier profil multiple (120).

12. Procédé pour la fabrication d'un dispositif de fixation (1) selon l'une des revendications 8 à 11 **caractérisé en ce que** sur le côté extérieur de la douille (70) est conformé au moins partiellement un deuxième profil multiple (130).

13. Procédé pour la fabrication d'un dispositif de fixation (1) selon l'une des revendications 8 à 12 **caractérisé en ce que** la douille (70) est réalisée plane dans le boîtier (10) sur la face supérieure (20) et la face arrière (30) du boîtier (10).
